# EUROPÄISCHE PATENTANMELDUNG

(11) **EP 1 004 804 A1**
(43) Veröffentlichungstag der Anmeldung: **31.05.2000**
(21) Anmeldenummer: 99123474.1
(22) Anmeldetag: 25.11.1999
(51) Int. Cl.: F16L 15/04

(54) **Schraubverbindung für Rohr**

(30) Priorität: 26.11.1998 DE 19854591
(71) Anmelder: Hewing GmbH, 48607 Ochtrup (DE)
(72) Erfinder: Riesselmann, Franz-Josef, 49393 Lohne (DE); Brägelmann, Peter, 48607 Ochtrup (DE)
(74) Vertreter: Hilleringmann, Jochen, Dipl.-Ing.

(57) **Zusammenfassung**

Die Schraubverbindung für Rohre, insbesondere Sanitär- oder Fußbodenheizungsrohre aus z.B. Kunststoff oder einem Metall-Kunststoff-Verbund ist mit mindestens einem Schraubverbindungselement (10), das einen im wesentlichen zylindrischen (16) Teil aufweist, in welchem ein Gewinde mit mindestens einer schraubenlinienförmig verlaufenden Erhebung (18) mit insbesondere im wesentlichen dreieckigem Querschnitt ausgebildet ist, versehen. Die mindestens eine Erhebung (18) des in Gewindeerstreckung verlaufenden Gewindes (14) weist einen an den zylindrischen Teil (16) angrenzenden oder in diesem liegenden Basisabschnitt (26) und einen sich an diesen radial anschließenden Endabschnitt (28) auf. Zumindest der Endabschnitt (28) der mindestens einen Erhebung (18) besteht innerhalb zumindest eines Teilbereichs (24) der Gewindeerstreckung aus einem Material, das elastischer ist als das Material des zylindrischen Teils (16).

## Beschreibung

Die Erfindung betrifft eine Schraubverbindung für Rohre, insbesondere Sanitär- oder Fußbodenheizungsrohre aus z.B. Kunststoff oder einem Metall-Kunststoff-Verbund.

Schraubverbindungen für Rohre sind grundsätzlich bekannt und bestehen im allgemeinen aus Metall. Ein Beispiel für ein für eine Schraubverbindung verwendetes Element ist ein Rohranschlußfitting, dessen Fittingkörper ein Außengewinde aufweist, um den Fitting mit einem weiteren Element der Rohrleitung oder einer Armatur zu verbinden. Dem Gewinde kommt dabei die Aufgabe zu, die Schraubverbindungselemente mechanisch zu halten und miteinander zu verbinden. Zu Abdichtungszwecken wird das Gewinde des einen Schraubverbindungselements mit Hanf oder einem Teflonband o.dgl. Dichtungsmaterial belegt, wodurch nach Verschraubung mit dem Gegenschraubverbindungselement eine fluiddichte Schraubverbindung entsteht.

In den letzten Jahren werden verstärkt Versuche unternommen, um Schraubverbindungselemente, wie beispielsweise Fittinge, aus Kunststoff herzustellen. Kunststofffittinge haben gegenüber Metallfittingen den Vorteil, daß sie wesentlich korrosionsbeständiger sind. Allerdings bereitet die Abdichtung von Schraubverbindungen aus zwei in Gewindeeingriff stehenden Kunststoff-Schraubverbindungselementen Probleme. Kunststoff weist nämlich gegenüber Metall eine geringere Spannungsfestigkeit auf, so daß beim Verschrauben von mit Dichtmaterial belegten Schraubverbindungselementen aus Kunststoff die Gefahr besteht, daß an den Schraubverbindungselementen wegen der erhöhten radialen mechanischen Spannungen Rißbildungen entstehen.

Aus DE-U-74 09 347 ist ein Außenanschlußgewinde mit Dichtung für einen Fitting nach dem Oberbegriff des Anspruchs 1 bekannt. Dieser Fitting weist ein Metallgewinde auf, in dessen axialen Mittelabschnitt eine Umfangnut eingearbeitet ist, in der sich ein Kunststoff-Einsatzring mit Außengewinde befindet. Der Einsatzring liegt mit seiner radialen Innenseite an dem Grund der Nut an. Das Außengewinde des Einsatzringes steht dabei gegenüber dem Außengewinde des Fittings vor.

Der Erfindung liegt die Aufgabe zugrunde, ein Schraubverbindungselement insbesondere aus Kunststoff für Rohre zu schaffen, das sowohl den mechanischen Anforderungen als auch den Dichtungsanforderungen von Schraubverbindungen entspricht, so daß die Gefahr der Zerstörung miteinander verschraubter Schraubverbindungen reduziert ist.

Zur Lösung dieser Aufgabe wird mit der Erfindung eine Schraubverbindung aus insbesondere Kunststoff für Rohre, vorzugsweise Sanitär- oder Fußbodenheizungsrohre aus z.B. Kunststoff oder einem Metall-Kunststoff-Verbund vorgeschlagen, die versehen ist mit
- mindestens einem Schraubverbindungselement, das einen im wesentlichen zylindrischen Teil aufweist, in welchem ein Gewinde mit mindestens einer schraubenlinienförmig verlaufenden Erhebung mit insbesondere im wesentlichen dreieckigem Querschnitt ausgebildet ist, wobei
- die mindestens eine Erhebung des in Gewindeerstreckung verlaufenden Gewindes einen an den zylindrischen Teil angrenzenden oder in diesem liegenden Basisabschnitt und einen sich an diesen radial anschließenden Endabschnitt aufweist.

Erfindungsgemäß ist diese Schraubverbindung dadurch gekennzeichnet, daß zumindest der Endabschnitt der mindestens einen Erhebung innerhalb zumindest eines Teilbereichs der Gewindeerstreckung aus einem Material besteht, das elastischer ist als das Material des zylindrischen Teils.

Die erfindungsgemäße Schraubverbindung weist mindestens ein Schraubverbindungselement auf, an dem ein im wesentlichen zylindrischer Teil ausgebildet ist, der ein Gewinde (Außen- oder Innengewinde) trägt. Das Gewinde kann dabei als im Querschnitt insbesondere dreieckige Erhebung aufgefaßt werden, die schraubenlinienförmig an dem zylindrischen Teil ausgebildet ist, so daß sich zueinander benachbarte Windungen von Erhebungen ergeben und das gesamte Gewinde entlang einer gedachten Achse (Gewindeerstreckung) verläuft. Die Erhebung weist dabei einen an dem zylindrischen Teil angrenzenden Basisabschnitt und einen sich an diesen anschließenden Endabschnitt auf. Der Endabschnitt besteht dabei aus einem insbesondere Kunststoffmaterial, das elastischer ist als das Material des zylindrischen Teils des mindestens einen Schraubverbindungselements. Das Gewinde braucht nicht notwendigerweise über seine gesamte Erstreckung im Endabschnitt der Erhebung aus diesem Material zu bestehen; es reicht vielmehr aus, wenn lediglich innerhalb eines Teilbereichs der Gewindeerstreckung die Endabschnitte der in diesem Gewindeabschnitt liegenden Erhebungswindungen aus diesem Material bestehen.

Wird ein derartiges (insbesondere Kunststoff-)Schraubverbindungselement mit einem Gegenschraubverbindungselement verschraubt, so kann dieses Gegenschraubverbindungselement durchgehend aus weniger elastischem und damit härterem Material gefertigt sein als dem Material, aus dem der Endabschnitt der mindestens einen Erhebung des Schraubverbindungselements über zumindest einen Teilbereich seiner Erstreckung hergestellt ist. Da das Gewinde des erfindungsgemäßen Schraubverbindungselements zumindest in Teilbereichen aus "hartem" Kunststoffmaterial besteht und damit die mechanischen Kräfte im mit einem beispielsweise aus Metall bestehenden Gegenschraubverbindungselement verschraubten Zustand aufnehmen kann, sind die Anforderungen an die mechanische Stabilität der Schraubverbindung mittels des erfindungsgemäßen Schraubverbindungselements erfüllt. Durch die spezielle erfindungsgemäße Ausgestaltung in zumindest einem anderen Teilbereich des Gewindes durch Vorsehen des elastischeren Materials kann der Dichtfunktionsanforderung der Schraubverbindung Genüge geleistet werden. Insbesondere weist derjenige Gewindeabschnitt, in dessen Bereich der Endabschnitt der Erhebung des Gewindes mit elastischerem Material versehen ist, ein gewisses Übermaß auf, so daß das elastische Material zuverlässig zwischen den Gewindegängen mit gewissem Druck eingeschlossen ist und die Zwischenräume vollständig ausfüllt, was der Fluidabdichtung der Schraubverbindung dienlich ist. Damit ist es beispielsweise möglich, das erfindungsgemäße Schraubverbindungselement aus temperatur-, hydrolyse- und chemikalienbeständigen Kunststoffmaterial, wie beispielsweise Polysulfon herzustellen, bei dem es sich um ein recht hartes und wenig elastisches Material handelt. In einem Teilbereich des Gewindes sind dessen Gewindegänge mit zäherem bzw. elastischerem Kunststoff, beispielsweise PEX oder EPDM belegt. Bei diesem Kunststoff sollte es sich ebenfalls um ein temperatur-, chemikalien- und hydrolysebeständiges Material handeln. Das Gegenschraubverbindungselement kann aus Metall bestehen, aber ebenso gut auch aus festem temperatur-, hydrolyse- und und chemikalienbeständigem Kunststoffmaterial.

Die beiden unterschiedlichen Materialabschnitte der Erhebung sind kraftschlüssig miteinander verbunden. Dies kann in Form eines Reib-, Form- oder Stoffschlusses erfolgen. In jedem Fall sollte die Verbindung der unterschiedlichen Materialien drehfest sein.

Es ist ferner denkbar, daß die gesamte Erhebung zumindest in einem Teil des Gewindes aus dem elastischeren Material besteht. Der Basisabschnitt der Erhebung fällt in diesem Fall mit der Wandung des (insbesondere hohl-) zylindrischen Teils zusammen, so daß der Endabschnitt der Erhebung radial von dem zylindrischen Teil nach innen (bei einem Innengewinde) oder nach außen (bei einem Außengewinde) übersteht.

Vorteilhafterweise verläuft das Gewinde des Schraubverbindungselements gemäß der erfindungsgemäßen Schraubverbindung leicht konisch, wobei der Außendurchmesser in demjenigen Bereich, in dem es mit dem elastischeren Material versehen ist, größer ist als in dem übrigen Bereich.

Wie sich aus dem Vorstehenden ergibt, dichtet die Schraubverbindung nach der Erfindung infolge des Vorsehens des elastischeren Materials ab. Daher kann dieses Material auch als "Dichtungsmaterial" bezeichnet werden.

Es ist möglich, nicht nur den Endabschnitt der die einzelnen Gewindegänge definierenden Erhebung sondern auch den Basisabschnitt aus dem elastischeren Dichtungsmaterial herzustellen. Schließlich ist es auch denkbar, die Zwischenräume zwischen den das Dichtungsmaterial aufweisenden Erhebungen mit diesem Dichtungsmaterial auszufüllen, so daß sich das Gewinde des Gegenschraubverbindungselements sozusagen in diese Dichtungsmaterialschicht "hineinschneidet". Beim Verschrauben zweier Schraubverbindungselemente ist es zweckmäßig, wenn die Verschraubung durch Vorsehen von korrespondierenden Anschlagflächen an beiden Elementen begrenzt wird. Bei dem erfindungsgemäßen Schraubverbindungselement ist es dabei von Vorteil, wenn die diesbezüglich vorgesehene Anschlagfläche von einem Material gebildet wird, das elastischer ist als das Material des zylindrischen Abschnitts des Schraubverbindungselements. Insbesondere handelt es sich bei diesem Material wiederum um das Dichtungsmaterial, das sich auch in Teilen des Gewindes befindet. Die Anschlagfläche ist insbesondere als radial verlaufende Ringfläche ausgebildet, gegen die eine korrespondierende Anschlagfläche bzw. Stirnfläche des Gegenschraubverbindungselements bei vollständig verschraubten Elementen andrückt. Damit ist in diesem Bereich eine zusätzliche Abdichtung der Schraubverbindung gegeben.

Nachfolgend werden anhand der Zeichnung Ausführungsbeispiele der Erfindung näher erläutert. Im einzelnen zeigen:
- Fig. 1: einen Schnitt durch das Gewinde eines Schraubverbindungselements, wie beispielsweise eines Fittings, und zwar denjenigen Teil des Gewindes, der aus vergleichsweise hartem Material besteht,
- Fig. 2: das Schraubverbindungselement gemäß Fig. 1 mit im Gewindebereich aufgebtachtem zähem bzw. elastischerem Material,
- Fig. 3: ein alternatives Ausführungsbeispiel eines Gewindes mit Teilbereich, in dem sich das Gegengewinde einschneiden kann,
- Fig. 4: eine weitere Variante eines Gewindes eines Schraubverbindungselements mit ansteigendem Gewinde in demjenigen Bereich, in dem das Gewinde mit einem elastischeren bzw. zähen Material versehen ist, und
- Fig. 5: ein Schraubverbindungselement mit Innengewinde, das teilweise mit zähen bzw. elastischem Material belegt ist.

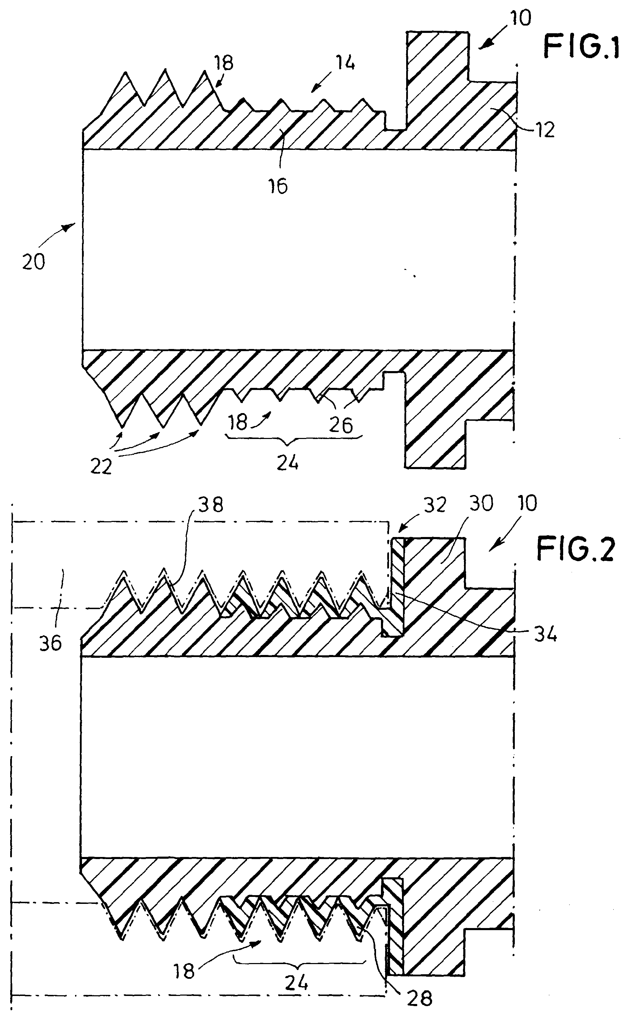

Fig. 1 zeigt einen Längsschnitt eines Teils eines Schraubverbindungselements 10 für Rohre, bei dem es sich beispielsweise um einen Fitting mit einem Grundkörper 12 aus Kunststoff handelt. In der Fig. 1 sowie in den übrigen Figuren ist jeweils derjenige Teil des Schraubverbindungselements 10 bzw. des Fittings gezeigt, der ein Gewinde 14 aufweist. In dem Ausführungsbeispiel gemäß Fig. 1 ist dieses Gewinde als Außengewinde ausgebildet, das außen auf einem zylindrischen Teil 16 des Schraubverbindungselements 10 angeordnet ist. Das Gewinde 14 weist eine im Querschnitt dreieckige Erhebung bzw. Rippe 18 auf, die sich in Umfangsrichtung schraubenlinienförmig auf dem zylindrischen Teil 16 entlang erstreckt und geringfügig gegenüber einer Radialebene versetzt ist. Dieser Versatz bestimmt die Steigung des Gewindes 14.

Wie in Fig. 1 zu erkennen ist, weisen lediglich die dem freien Ende 20 des zylindrischen Teils 16 zugeordneten Gewindewindungen 22 die volle Höhe der Erhebung 18 auf. Im übrigen Teilbereich 24 des Gewindes 14 weist die schraubenlinienförmig verlaufende Erhebung 18 eine geringere Höhe auf. Lediglich ein sich an den zylindrischen Teil 16 anschließender Basisabschnitt 26 der Erhebung 18, der in diesem Ausführungsbeispiel ebenfalls im Querschnitt dreieckig ausgebildet ist, ist in diesem Gewindeabschnitt 24 vorgesehen.

Der in Fig. 1 dargestellte Teil des Schraubverbindungselements besteht aus einem vergleichsweise harten Kunststoffmaterial, das temperatur-, chemikalien- und hydrolysebeständig ist. Bei diesem Material handelt es sich beispielsweise um Polysulfon. Ebenso könnte als Material aber auch ein Metall verwendet werden.

Wie anhand von Fig. 2 zu erkennen ist, besteht die umlaufende Erhebung 18 im Bereich des Gewindeabschnitts 24 aus zwei Materialien, indem auf den Basisabschnitt 26 gemäß Fig. 1 ein Endabschnitt 28 aus einem gegenüber dem Material des Basisabschnitts 26 elastischeren Material angeordnet ist. Bei diesem Material handelt es sich insbesondere um PEX oder EPDM. Durch dieses aufgebrachte Material entsteht insgesamt eine Erhebung 18, wie sie auch im endseitigen Teil des Gewindes 14 ausgebildet ist. Das Material der Endabschnitte 28 im Gewindeabschnitt 24 wird beispielsweise durch Umspritzen des Schraubverbindungselements 10 gemäß Fig. 1 aufgebracht.

Wie sich aus Fig. 2 ferner ergibt, weist das Schraubverbindungselement 10 einen radial überstehenden umlaufenden Bund 30 auf, der dem Gewinde zugewandt eine ringförmige Anschlagfläche 32 bildet. Auf dieser ringförmigen Anschlagfläche 32 befindet sich eine Schicht 34 aus einem Dichtungsmaterial, bei dem es sich insbesondere um das Material des Endabschnitts 28 der Erhebung 18 im Gewindeabschnitt 24 handelt.

In Fig. 2 ist durch gestrichelte Linien angedeutet, wie das Schraubverbindungselement 10 mit einem Gegenschraubverbindungselement 36 verschraubt ist. Dieses Element 36 weist ein Innengewinde 38 auf, das mit dem Außengewinde 14 in Gewindeeingriff steht. Die mechanischen Zug- und Druckkräfte werden dabei seitens des Schraubverbindungselements 10 von den Windungen 22 des Gewindes 14 aufgenommen, während die Dichtfunktion durch das elastischere Material der Erhebung 18 im Gewindeabschnitt 24 erzielt wird. Die somit geschaffene Schraubverbindung erfüllt also die beiden Hauptanforderungen, nämlich einerseits mechanische Stabilität und andererseits Dichtigkeit. Diese Dichtigkeit wird noch dadurch erhöht, daß das Gegenschraubverbindungselement 36 in vollständig aufgeschraubtem Zustand an der Materialschicht 34 anliegt, wodurch auch hier eine Dichtfunktion realisiert wird.

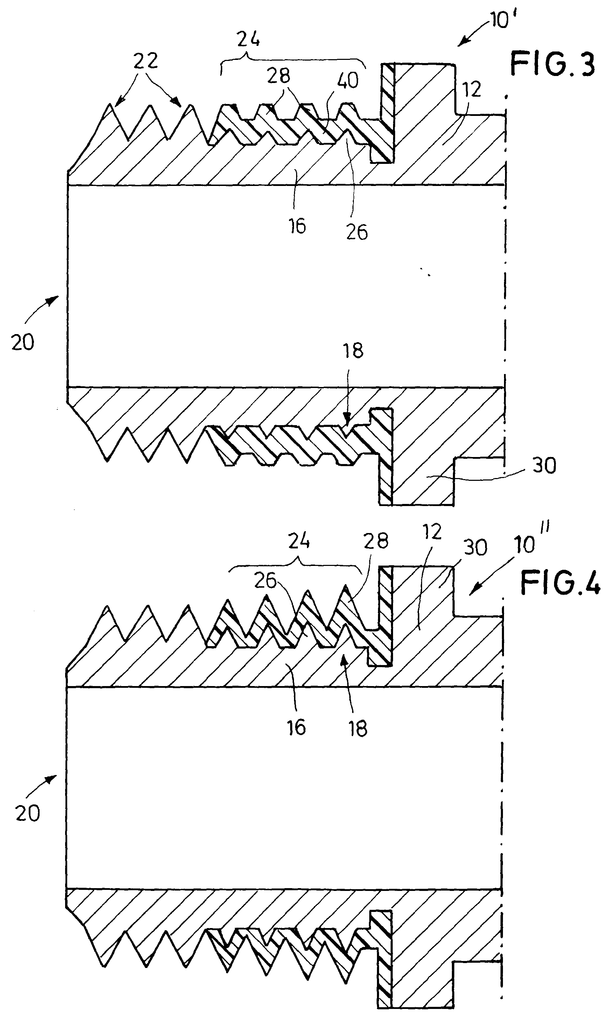

Fig. 3 zeigt eine alternative Ausgestaltung des in einem Teil des Gewindes aufgebrachten elastischeren (Dichtungs-)Materials. Soweit die Teile des Schraubverbindungselements 10' der Fig. 3 denen der Fig. 2 entsprechen, sind sie mit den gleichen Bezugszeichen versehen. Der Grundkörper 12 mit zylindrischem Teil 16 ist dabei genauso ausgebildet wie im Falle der Fign. 1 und 2. Im Gewindeabschnitt 24 ist auf den Basisschnitt 26 der Gewindeerhebung 18 das den Endabschnitt 28 bildende Material aufgebracht, wobei sich dieses Material auch in den Zwischenräumen 40 benachbarter Windungen der Erhebung 18 befindet und diese teilweise ausfüllt. Das in Fig. 3 nicht dargestellte Gegehschraubverbindungselement schneidet sich sozusagen mit seinem Gewinde in das Material dieser Zwischenräume 40 hinein, wodurch dieses Material verdrängt wird und insgesamt dem Dichtungsmaterial ein erhöhter Druck verliehen wird, was die Dichtigkeit erhöht.

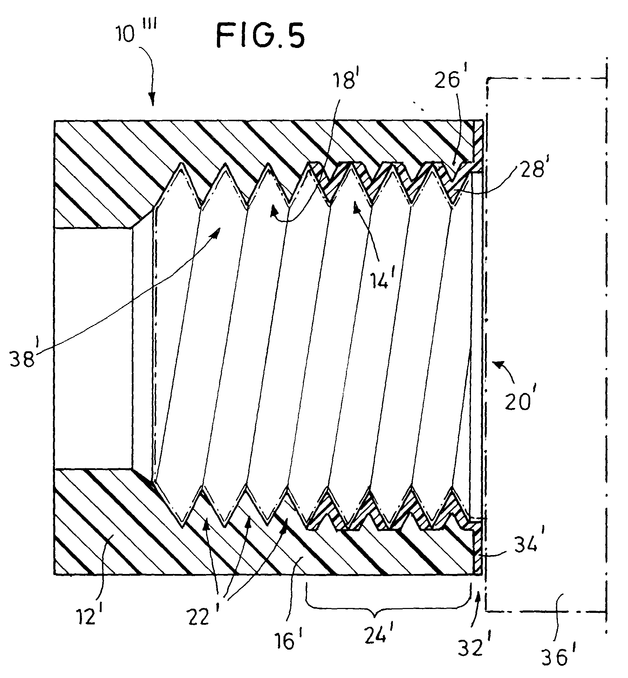

Bei dem Ausführungsbeispiel eines Schraubverbindungselements 10'' gemäß Fig. 4 wird ebenfalls der gleiche Grundkörper 12 wie in den Fign. 1 bis 3 dargestellt verwendet. Der Unterschied dieses Schraubverbindungselements 10'' gegenüber demjenigen der Fign. 2 und 3 besteht darin, daß die Höhe der Erhebung 18 im Gewindeabschnitt 24 zum Bund 30 hin sich vergrößert. Auf diese Weise entsteht ein konisch sich zum freien Ende 20 des zylindrischen Teils 16 verjüngendes Gewinde. Auch dies trägt zur Erhöhung des Materialdrucks innerhalb des Endabschnitts 28 der Erhebung 18 im Gewindeabschnitt 24 bei, was die Zuverlässigkeit der Abdichtung der Schraubverbindung erhöht.

Fig. 5 schließlich zeigt ein Schraubverbindungselement 10''', das im Gegensatz zu den Ausführungsbeispielen gemäß den Fign. 1 bis 4 ein Innengewinde 14' aufweist. Soweit die Teile des Schraubverbindungselements 10''' denen der Schraubverbindungselemente gemäß den Fign. 1 bis 4 entsprechen bzw. funktionsgleich mit diesen sind, sind sie mit den gleichen Bezugszeichen, jedoch einfach gestrichen, gekennzeichnet.

Die schraubenlinienförmig verlaufende Erhebung 18' ist bis auf den dem freien Ende 20' zugewandten Gewindeabschnitt 24' des zylindrischen Teils 16' aus dem Material des Grundkörpers 12' gefertigt. Im Gewindeabschnitt 24' weist die Erhebung 18' einen einstückig mit dem Grundkörper 12' ausgebildeten Basisabschnitt 26' auf, an den sich ein Endabschnitt 28' aus einem elastischerem Material als demjenigen des Grundkörpers 12' anschließt. Die Stirnfläche 32' am freien Ende 20' des zylindrischen Teils 16' ist mit einer Schicht 34' versehen, deren Material gleich dem Material des Endabschnitts 28' der sich innerhalb des Gewindeabschnitts 24' erstreckenden Erhebung 18' ist. Bei Verschraubung mit dem in Fig. 5 gestrichelt dargestellten Gegenschraubverbindungselement 36' dienen die Windungen 22' des Gewindes 14' der mechanischen Stabilität der Schraubverbindung, während das elastischere Material des Endabschnitts 28' innerhalb des Gewindeabschnitts 24' die Dichtfunktion übernimmt, die noch ergänzt wird durch die Materialschicht 34', an der das Gegenschraubverbindungselement 36' in vollständig aufgeschraubtem Zustand anliegt.

## Patentansprüche

1. Schraubverbindung für Rohre, insbesondere Sanitär- oder Fußbodenheizungsrohre aus z.B. Kunststoff oder einem Metall-Kunststoff-Verbund mit
- mindestens einem Schraubverbindungselement (10;10';10'';10'''), das einen im wesentlichen zylindrischen Teil (16;16') aufweist, in welchem ein Gewinde (14;14') mit mindestens einer schraubenlinienförmig verlaufenden Erhebung (18;18') mit insbesondere im wesentlichen dreieckigem Querschnitt ausgebildet ist, wobei
- die mindestens eine Erhebung (18;18') in mindestens einem axialen Teilbereich (24;24') der Gewindeerstreckung aus einem Material besteht, das elastischer ist als das Material des zylindrischen Teils (16;16'),
**dadurch gekennzeichnet**,
- daß die mindestens eine Erhebung (18;18') in diesem axialen Teilbereich (24;24') der Gewindeerstreckung einen an den zylindrischen Teil (16;16') angrenzenden und von diesem abstehenden Basisabschnitt (26;26') und einen sich an diesen radial anschließenden Endabschnitt (28;28') aufweist, und
- daß dieser Endabschnitt (28;28') aus einem Material besteht, das elastischer ist als das Material des zylindrischen Teils (16;16').

2. Schraubverbindung nach Anspruch 1, dadurch gekennzeichnet, daß der Basisabschnitt (26;26') der mindestens einen Erhebung (18;18') aus einem Material besteht, das weniger elastisch ist als das Material des Endabschnitts (28;28').

3. Schraubverbindung nach Anspruch 2, dadurch gekennzeichnet, daß der Basisabschnitt (26;26') der mindestens einen Erhebung (18;18') aus dem gleichen Material wie der zylindrische Teil (16;16') besteht.

4. Schraubverbindung nach einem der Ansprüche 1 bis 3, dadurch gekennzeichnet, daß der zylindrische Teil (16;16') und der Endabschnitt (28;28') der mindestens einen Erhebung (18;18') jeweils aus Kunststoffmaterial bestehen.

5. Schraubverbindung nach Anspruch 4, dadurch gekennzeichnet, daß der zylindrische Teil (16;16') aus einem Kunststoffmaterial geringerer Elastizität wie z.B. PSU und der Endabschnitt (28;28') der mindestens einen Erhebung (18;18') aus einem weicheren Kunststoffmaterial wie z.B. PEX oder EPDM besteht.

6. Schraubverbindung nach einem der Ansprüche 1 bis 5, dadurch gekennzeichnet, daß in einem Teilbereich (24) der Gewindeerstreckung der Zwischenraum (40) zwischen benachbarten Windungen zumindest teilweise von einem Material ausgefüllt ist, das elastischer ist als das Material des zylindrischen Teils (16).

7. Schraubverbindung nach Anspruch 6, dadurch gekennzeichnet, daß das Material im Zwischenraum (40) zwischen benachbarten Windungen der mindestens einen Erhebung (18) gleich dem Material des Endabschnitts (28) der mindestens einen Erhebung (18) ist.

8. Schraubverbindung nach einem der Ansprüche 1 bis 7, dadurch gekennzeichnet, daß die Materialien des Endabschnitts (28;28') und des Basisabschnitts (26;26') der Erhebung (18;18') kraftschlüssig miteinander verbunden sind.

9. Schraubverbindung nach Anspruch 8, dadurch gekennzeichnet, daß die Materialien des Endabschnitts (28;28') und des Basisabschnitts (26;26') der Erhebung (18;18') durch Anspritzen stoffschlüssig miteinander verbunden sind.

10. Schraubverbindung nach Anspruch 8, dadurch gekennzeichnet, daß die Materialien des Endabschnitts (28;28') und des Basisabschnitts (26;26') der Erhebung (18;18') reib- und/oder formschlüssig miteinander verbunden sind.

11. Schraubverbindung nach einem der Ansprüche 1 bis 10, dadurch gekennzeichnet, daß das Gewinde (14; 14') ein Außen- oder Innengewinde ist.

12. Schraubverbindung nach einem der Ansprüche 1 bis 11, dadurch gekennzeichnet, daß die Höhe der Erhebung (18) des Gewindes (14) zu dessen Ende hin ansteigt.

13. Schraubverbindung nach einem der Ansprüche 1 bis 12, dadurch gekennzeichnet, daß am Schraubverbindungselement (10;10';10'';10''') eine Anschlagfläche (32;32') für ein auf das Gewinde (14;14') aufschraubbares Gegenschraubverbindungselement (36;36') ausgebildet ist und daß die Anschlagfläche (32;32') von einer Schicht (34;34') aus Material gebildet ist, das elastischer ist als das Material des zylindrischen Teils (16;16').

14. Schraubverbindung nach Anspruch 13, dadurch gekennzeichnet, daß das Material der Schicht (34; 34') der Anschlagfläche (32;32') gleich dem Material des Endabschnitts (28;28') der mindestens einen Erhebung (18;18') ist.
